(19) Europäisches Patentamt
European Patent Office
Office européen des brevets

(11) Publication number: **0 092 923 A1**

(12) **EUROPEAN PATENT APPLICATION**

(21) Application number: 83301938.3

(22) Date of filing: 06.04.83

(51) Int. Cl.³: C 09 B 45/16
//D06P1/10

(30) Priority: 23.04.82 FR 8206997

(43) Date of publication of application: 02.11.83 Bulletin 83/44

(84) Designated Contracting States: BE CH DE FR GB IT LI NL

(71) Applicant: I.C.I. FRANCOLOR S.A.
8 Avenue Reaumur Boîte Postale 207
F-92142 Clamart Cedex(FR)

(72) Inventor: Gangneux, Philippe
10 Rue Philibert Caux
F-76420 Bihorel(FR)

(74) Representative: Ricks, Michael James et al,
Imperial Chemical Industries PLC Legal Department: Patents Thames House North Millbank
London SW1P 4QG(GB)

(54) **1/2 Chromium complex dyestuffs, their preparation and use.**

(57) The invention relates to 1/2 chromium complex dyestuffs of the formula:

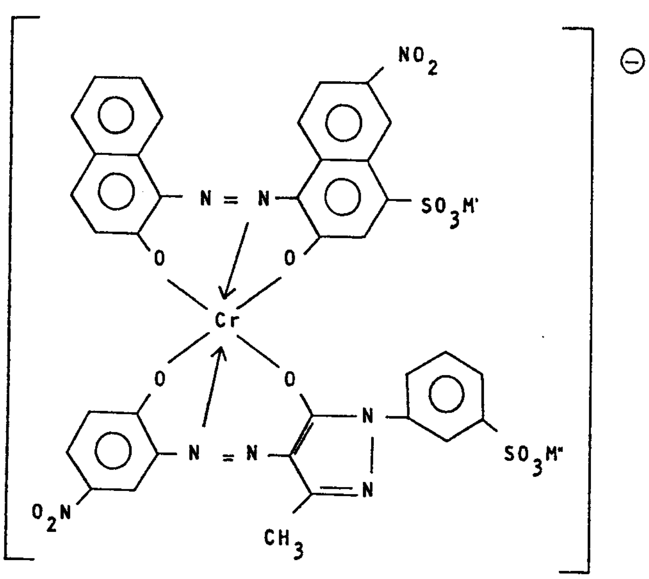

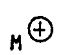

where M, M' and M" are the same or different and each represent a hydrogen cation or one equivalent of a colourless cation.

The complexes of the invention can be used to colour nitrogenous materials, wood and varnishes in very dark brown shades.

EP 0 092 923 A1

1/2 CHROMIUM COMPLEX DYESTUFFS, THEIR PREPARATION AND USE

This invention relates to new 1/2 chromium complex dyestuffs, their preparation and use. The dyestuffs of the invention can be used to colour a wide range of substrates in brown shades.

The 1/2 chromium complexes according to the invention are of the following general formula:

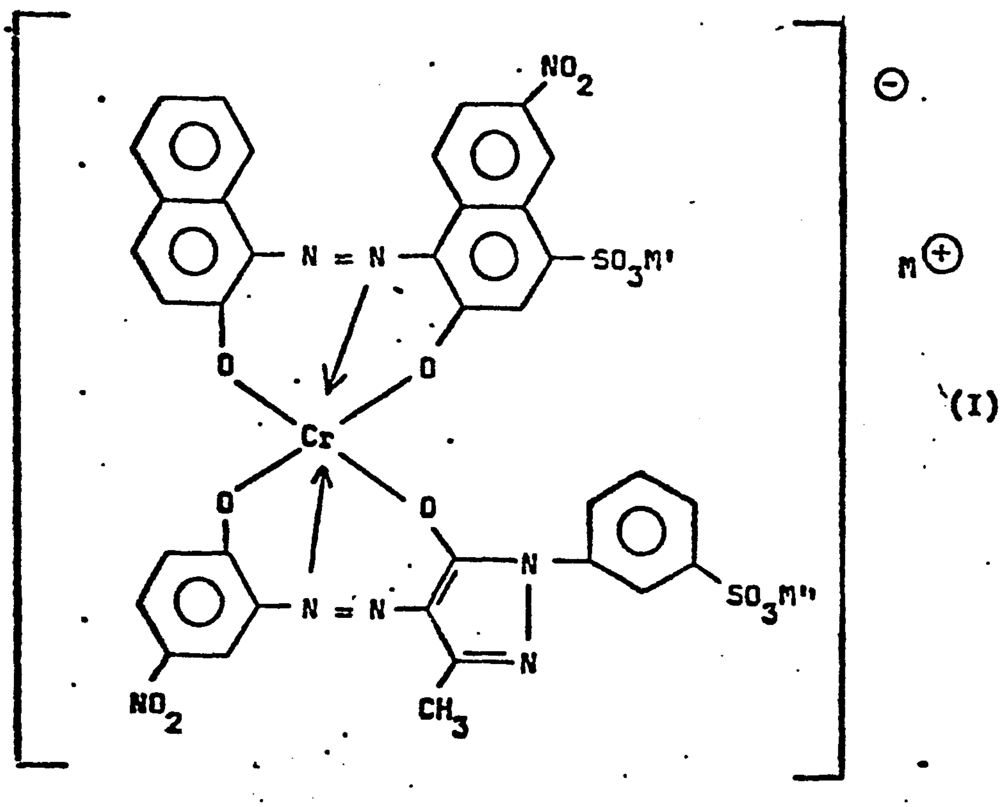

(I)

in which M, M' and M" may be the same or different and each represent a hydrogen cation or one equivalent of a colourless cation.

The complexes of the invention can be obtained from monoazo dyestuffs of the formulae:

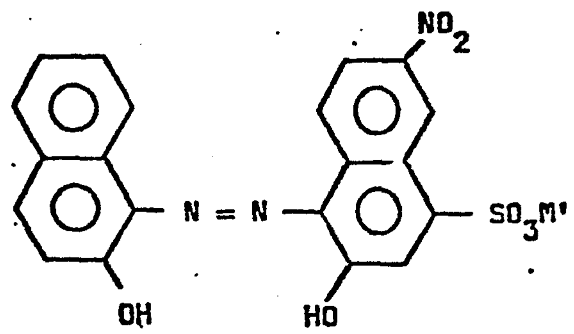

(II)

and

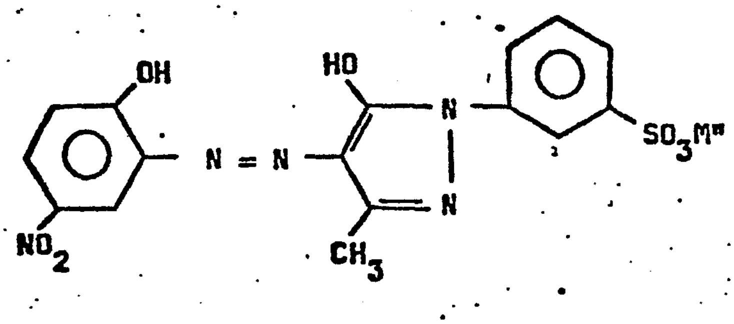

(III)

where M' and M" have the same meaning as above. The 1/2 chromium complexes can be obtained from the monoazo dyestuffs by a known process which consists of reacting one of the monoazo dyestuffs with a chromium-donating agent to convert it into a 1/1 chromium complex, then condensing this 1/1 complex with the other monoazo dyestuff. It is preferable first to prepare the 1/1 complex of dyestuff (III) and then to react it with dyestuff (II).

The monoazo dyestuff of formula (II) may be prepared in a known way by coupling 6-nitro-1-diazide-naphthoquin-2-one -4-sulphonic acid with beta-naphthol or by diazotising 1-amino-6-nitro-naphth-2-ol -4-sulphonic acid and coupling it with beta-naphthol.

The monoazo dyestuff of formula (III) may be prepared in a known way by diazotising 4-nitro-2-aminophenol and coupling it with 1-(3-sulphophenyl)-3-methylpyrazol-5-one.

The conversion of the monoazo o,o'-dihydroxy dyestuff of formula (II) or (III) into a 1/1 chromium complex may be performed in known manner by reacting the dyestuff in an acidic aqueous medium with a trivalent chromium salt such as formate, acetate, fluoride or sulphate at or above the boiling point. The trivalent chromium salt may also be produced in situ from derivatives of chromium (VI) by adding a reducing agent such as glucose to the reaction mixture. The metallisation may be effected in the presence of organic solvents, in particular in the presence of polyols (e.g. ethylene glycol, diethylene glycol, propylene glycol) or their mono or diethers.

The dyestuffs (II) and (III) and their 1/1 chromium complex are preferably used for the condensation reaction in the form of a damp paste, but may also be used after drying.

The condensation reaction between the 1/1 chromium complex of the dyestuff of formula (III) or (II) with the non-metallised dyestuff of formula (II) or (III) is effected in a slightly alkaline, neutral or slightly acid medium, in an open or a closed container, at a temperature between ambient and 120°C, but preferably between 60 and 120°C. The relative quantities of 1/1 complex and non-metallised dyestuff preferably lie between the molar ratios of 0.85/1 and 1/0.85; it is advantageous to be close to the ratio of 1/1 with possibly a slight excess of metallised compound (molar ratio 1/1 to 1.05/1). The reaction may be conducted in an aqueous medium, an organic medium or in a mixture of water and organic solvent. As organic solvent there may be used for example, alcohols or polyols (either partially or totally etherified) and amides such as formamide, dimethylformamide and dimethylacetamide; these solvents may be used alone or as mixtures.

The asymmetric 1/2 chromium complexes thus obtained may be used directly in solution (especially when the preparation has been conducted in the presence of solvents), or may be dried directly or isolated by known methods (especially when the reaction has been conducted in an

aqueous medium). The complexes according to the invention may therefore be obtained and used as dyestuffs in the form of a free acid or as salts (in particular alkaline salts such as potassium and, preferably, sodium) or also as ammonium salts or as salts of organic amines in which the nitrogen atom is positively charged (for example ethanolamines).

These new complexes, which are dark brown in colour, are suitable for dyeing and printing a wide range of materials (fibres, fabrics, wood, varnishes) and more particularly materials containing nitrogen, such as silk, leather, wool, synthetic polyamide fibres or polyurethanes.

In comparison with dyestuffs with similar chemical structures the complexes of the invention have a number of remarkable and suprising properties. In particular, suprisingly advantageous properties of the complex according to the invention may be demonstatated as compared with the following dyestuffs:

(i) the isomeric dyestuff known as Acid Brown 355 obtained from the monoazo dyestuff (II) and 1-phenyl-3-methyl-4-(2-hydroxy-3-sulpho-5-nitrophenylazo)-5-hydroxypyrazole (see French Patents 1220724 and 2362900);

(ii) the isomeric dyestuff in which the $SO_3M''$ group is fixed in the -4 position of the phenyl radical of pyrazolone; and

(iii) the monosulphonated dyestuff known as Acid Brown 282 obtained from the monoazo (II) and 1-phenyl-3-methyl-4-(2-hydroxy-5-nitrophenylazo)-5-hydroxypyrazole (see French Patent No.1352623, page 4, No.2).

The complexes according to the invention have, unexpectedly, a number of remarkable properties, in particular:

particularly desirable very dark brown shades;

chemical purity and ease of synthesis;

excellent solubility in water, the above-mentioned solvents and water/solvent blends.

When the above-mentioned isomeric dyestuffs are prepared by the method of the invention, large quantities of the two symmetric derivatives are generated as by-products, especially in an aqueous

medium, and these change the shade and the applicative properties. In contrast the complexes according to the invention can be synthesised easily in an aqueous or solvent medium and the symmetric by-product content is very small.

The excellent solubility of the complexes according to the invention in water, the above-mentioned solvents and blends of these solvents with each other or with water makes it possible to prepare concentrated and stable solutions adapted to different uses.

Other advantages concerning the quality of the materials coloured with the complexes according to the invention can be seen from the following Table in which "Ref" denotes the dyestuff taken as the control and the signs -, ± , + and ++ denote respectively lower than, equivalent to, superior to and very superior to the control dyestuff.

| Property | Acid Brown 355 | Acid Brown 282 | Complexes acc. to invention |
|---|---|---|---|
| Water solubility | + | Ref | ++ |
| Light fastness (modified Xenotest automobile test) | + | Ref | + |
| Printing on polyamide taffeta | | | |
| *stability of pastes | - | Ref | ± |
| *presence of pinholes | yes | no | no |
| *penetration | Ref (average levelling) | ± (fairly average levelling) | ++ (very good levelling) |
| Printing on polyamide + space dyeing | | | |
| *stability of pastes | - (gelled at pH 2, 5-3) | Ref | ± |
| *fixing speed | Ref | + | ++ |
| Strong printing on wool | Ref | - (less good fixing) | + |
| Fastness to artificial light on polyamide | - (reddens) | Ref | ± |
| Fastness to dry rubbing | Ref | ± | + |
| Fastness to migration in plasticised PVC of dyes on leather | Ref | | + |

The following Examples illustrate the invention.

Example 1

1 Mol. of the o,o'-dihydroxy-azo dyestuff obtained by coupling 6-nitro-1-diazide-naphthoquin-2-one -4-sulphonic acid with beta-naphthol (in the form of a moist paste) was introduced slowly into 2 litres of water. The suspension was neutralised to pH 6 with a 10N solution of sodium hydroxide (approximately 25ml), and 0.95 mol. of the 1/1 chromium complex of the o,o'-dihydroxy-azo dyestuff obtained by coupling the diazo derivative of 4-nitro-2-aminophenol with 1-(3-sulphophenyl)-3-methylpyrazol-5-one was added in the form of a moist paste.

This mixture was heated to 90-95°C and the pH maintained at between 4.5 and 7 by the addition of a solution of sodium hydroxide. After 1 to 2 hours, the reaction was monitored using thin film chromatrography and 0.05 to 0.07 mol. of the above 1/1 complex was added until a chromatographic check revealed that the non-metallised monoazo dyestuff had completely disappeared and that there was a slight excess of 1/1 complex.

When the reaction was finished (after 3 to 6 hours), the pH was, if necessary, adjusted to 4-6 by the addition of acetic acid and maintained for an hour at 90°C. The product containing the sodium salt of the complex (I) was then dried directly by atomisation.

Example 2

1 Mol. of the same 1/1 complex as in Example 1 was introduced into a mixture containing 0.75 litre of ethylene glycol monomethyl ether and 2 litres of water. After homogenisation, 1 mol. of the same o,o'-dihydroxy-azo dyestuff as in Example 1 was added. The two constituents were added in the form of ground powder, but could also have been used in the form of moist paste if the quantity of water used initially was reduced accordingly.

The pH was brought to 5-6 by adding a 10N solution of sodium hydroxide and the mixture was heated for 2-3 hours at 90-95°C while the pH was maintained at 5-6. The reaction was monitored as in Example 1 and up to 0.05 mol. of the 1/1 complex added if necessary.

After cooling and sieving through a metal grid, a solution of the sodium salt of the complex (I) was obtained which could be used as it was or could be diluted with water, ethylene glycol monomethyl ether, dimethylformamide or a mixture of these solvents.

CLAIMS

1. 1/2 chromium complex dyestuffs of the formula:

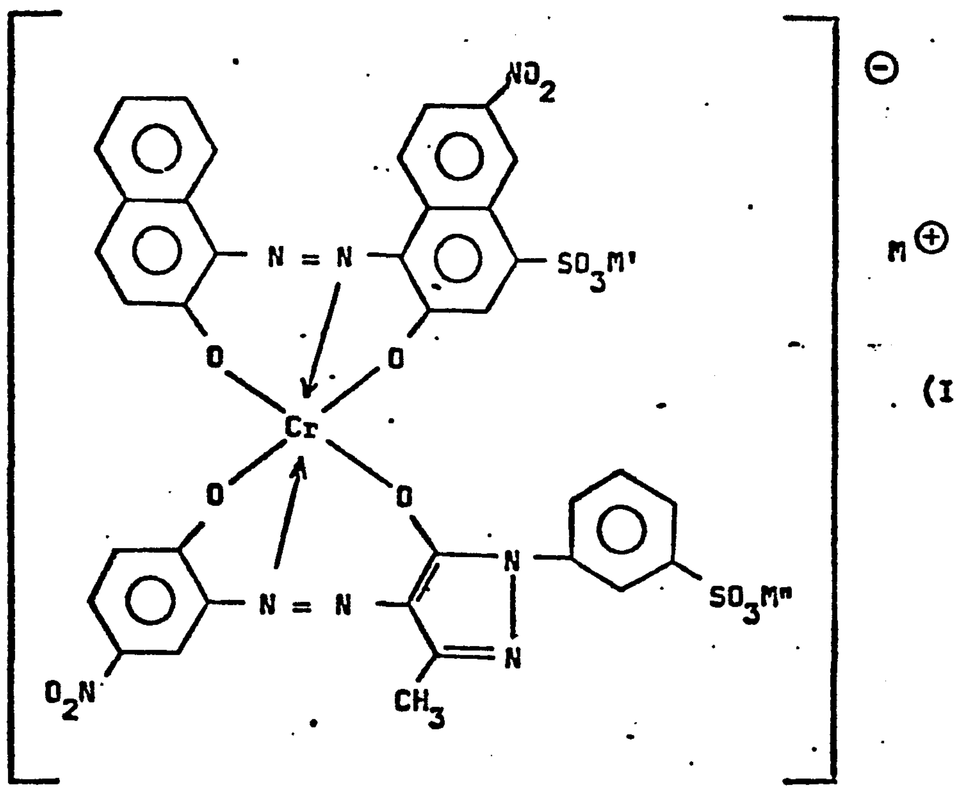

(I)

where M, M' and M" are the same or different and each represent a hydrogen cation or one equivalent of a colourless cation.

2. Process for the preparation of the chromium complex dyestuffs according to claim 1, characterised in that the 1/1 chromium complex of the monoazo dyestuff of formula:

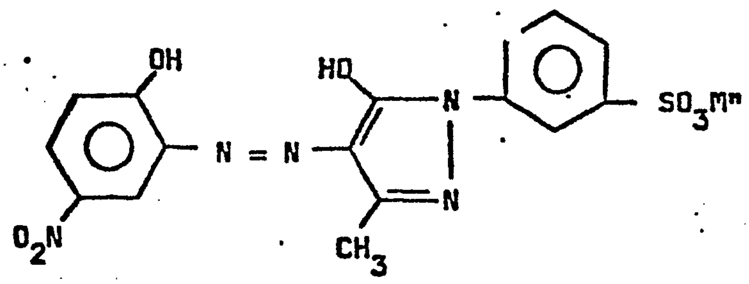

(III)

is reacted with the monoazo dyestuff of the formula:

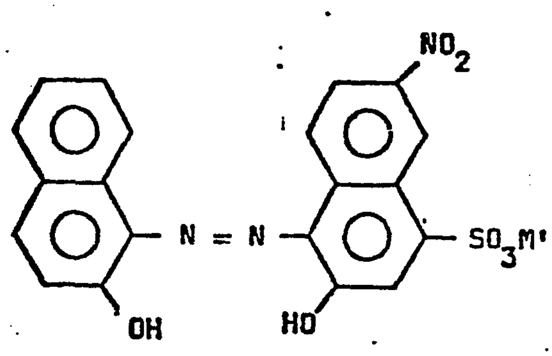

(II)

or conversely, the 1/1 chromium complex of the monoazo dyestuff of formula (II) is reacted with the monoazo dyestuff of formula (III).

3. Use of the chromium complex dyestuffs according to claim 1 for colouring nitrogenous materials, wood and varnishes.

4. Substrates coloured using a chromium complex dyestuff according to claim 1.

European Patent Office

# EUROPEAN SEARCH REPORT

0092923

Application number

EP 83 30 1938

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. 3) |
| X | FR-A-2 340 355 (HOECHST) * Page 1; pages 7,8, example 3 * | 1-4 | C 09 B 45/16 // D 06 P 1/10 |
| D,Y | FR-A-1 352 623 (CIBA) * Page 1 * | 1,3,4 | |
| Y | DE-B-1 259 482 (BASF) * Column 1, paragraphs 1,2; columns 5,6, table, example 22 * | 1,3,4 | |
| A | EP-A-0 044 937 (HOECHST) * Pages 1,2, formulae I,II * | 1,3,4 | |
| | | | TECHNICAL FIELDS SEARCHED (Int. Cl. 3) |
| | | | C 09 B 45/00 |

The present search report has been drawn up for all claims

| Place of search | Date of completion of the search | Examiner |
|---|---|---|
| THE HAGUE | 28-07-1983 | GREEN C.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82